# EUROPEAN PATENT APPLICATION

(11) **EP 4 794 347 A1**
(43) Date of publication of application: **19.08.2026**
(21) Application number: 24877071.1
(22) Date of filing: 02.10.2024
(51) Int. Cl.: H04N 25/76, H04N 25/42, H04N 25/77, H04N 25/701

(54) **SOLID-STATE IMAGING ELEMENT, DISTANCE IMAGE CAPTURING DEVICE, AND CONTROL METHOD**

(30) Priority: 13.10.2023 JP 2023177274
(71) Applicant: Toppan Holdings Inc., Tokyo 110-0016 (JP)
(72) Inventor: ISOBE Keigo, Tokyo 110-0016 (JP)
(74) Representative: Plasseraud IP
(86) International application number: PCT/JP2024/035256
(87) International publication number: WO 2025/079473

(57) **Abstract**

A solid-state imaging element includes a plurality of pixels, addition switches, and a pixel drive circuit. Each of the plurality of pixels includes a photoelectric conversion device that generates charge corresponding to incident light, a charge storage unit that stores the charge, and a reset switch that resets a potential of the charge storage unit to a predetermined reset potential supplied from a power supply line. The addition switches are connected in series in two or more stages, and each of the addition switches is disposed between the power supply line and a connection line connecting power supply line sides of the reset switches of a predetermined number of pixels. The addition switches are capable of changing, by a change in a conduction state, a region of the pixels in which addition of the charge stored in the charge storage unit is performed. The pixel drive circuit changes a conduction state of the reset switches and the addition switches in the two or more stages according to the region of the pixels in which addition of the charge is performed.

## Description

### [Technical Field]

The present invention relates to a solid-state imaging element, a range imaging device, and a control method.

This application is based on and claims the benefit of priority from Japanese Patent Application No. 2023-177274 filed October 13, 2023, the contents of which are incorporated herein by reference.

### [Background Art]

Time-of-flight (hereinafter referred to as "TOF") range imaging devices use the known speed of light to measure the distance between the measurement device and an object based on the time of flight of light in a space (measurement space) (see, for example, PTL 1). An imaging device such as a range imaging device captures an image, for example, using a solid-state imaging element including a photoelectric conversion device such as a photodiode.

### [Citation List]

### [Patent Literature]

PTL 1: JP 4235729 B

### [Summary of the Invention]

### [Technical Problem]

In some cases, pixels of a solid-state imaging element are added and used. In conventional solid-state imaging elements, a plurality of switches are provided in a pixel, and pixel values (charge) obtained through photoelectric conversion by a plurality of photoelectric conversion devices are added and used. Thus, a large pixel size is a problem in conventional solid-state imaging elements. Furthermore, in conventional solid-state imaging elements, it is difficult to flexibly change, according to the imaging scene, a pixel region in which addition of charge is performed.

The present invention has been made to solve the above problems, and an object of the present invention is to provide a solid-state imaging element, a range imaging device, and a control method capable of flexibly changing, according to the imaging scene, a pixel region in which addition of charge is performed, while preventing a large pixel size.

### [Solution to Problem]

In order to solve the above problem, Aspect 1 of the present invention is a solid-state imaging element including: a plurality of pixels each of which includes a photoelectric conversion device that generates charge corresponding to incident light, a charge storage unit that stores the charge, and a reset switch that resets a potential of the charge storage unit to a predetermined reset potential supplied from a power supply line; addition switches that are connected in series in two or more stages and each of which is disposed between the power supply line and a connection line connecting power supply line sides of the reset switches of a predetermined number of pixels, the addition switches being capable of changing, by a change in a conduction state, a region of the pixels in which addition of the charge stored in the charge storage unit is performed; and a pixel drive circuit that changes a conduction state of the reset switches and the addition switches in the two or more stages according to the region of the pixels in which addition of the charge is performed.

Aspect 2 of the present invention may be configured such that in the solid-state imaging element according to Aspect 1, the addition switches in the two or more stages are first addition switches each of which is disposed between the power supply line and a first connection line connecting power supply line sides of the reset switches of N pixels and enables, via the first connection line and the reset switches, addition of the charge stored in N charge storage units of the charge storage units, N being an integer greater than or equal to 2, and a second addition switch that is disposed between the power supply line and a second connection line connecting power supply line sides of M first addition switches of the first addition switches and enables, via the second connection line and the first addition switches, addition of addition charge in addition pixel regions each of which is a region of the N pixels connected by the first connection line, M being an integer greater than or equal to 2, and the pixel drive circuit changes a conduction state of the reset switches, the first addition switches, and the second addition switch according to the region of the pixels in which addition of the charge is performed.

Aspect 3 of the present invention may be configured such that in the solid-state imaging element according to Aspect 2, the addition pixel regions are linearly connected and serve as a line sensor.

Aspect 4 of the present invention may be configured such that in the solid-state imaging element according to Aspect 2, the first connection line and the second connection line are connected to perform addition of pixels that are not adjacent to each other.

Aspect 5 of the present invention may be configured such that in the solid-state imaging element according to any one of Aspects 1 to 4, each of the pixels is a 4-transistor pixel including a reset transistor that is the reset switch, a source follower transistor that converts the charge into an electrical signal, a transfer transistor that transfers the charge to the source follower transistor, and a selection transistor that selects reading of the electrical signal of a corresponding one of the pixels.

Aspect 6 of the present invention may be configured such that in the solid-state imaging element according to any one of Aspects 1 to 4, each of the pixels is a 3-transistor pixel including a reset transistor that is the reset switch, a source follower transistor that converts the charge into an electrical signal, and a selection transistor that selects reading of the electrical signal of a corresponding one of the pixels.

Aspect 7 of the present invention may be configured such that in the solid-state imaging element according to any one of Aspects 1 to 6, each of the pixels includes a plurality of charge storage units, and charge is allowed to be distributed and stored in each of the charge storage units, and the pixel drive circuit causes the charge to be distributed and stored in each of the charge storage units.

Aspect 8 of the present invention may be a range imaging device including: a light source unit that irradiates a subject with a light pulse; a light receiving unit that includes the solid-state imaging element according to any one of Aspects 1 to 7; and a range image processing unit that controls the pixel drive circuit to cause charge to be stored in each of the charge storage units and calculates a distance to the subject based on a quantity of charge stored in each of the charge storage units.

Aspect 9 of the present invention is a method of controlling a solid-state imaging element, wherein the solid-state imaging element includes a plurality of pixels each of which includes a photoelectric conversion device that generates charge corresponding to incident light, a charge storage unit that stores the charge, and a reset switch that resets a potential of the charge storage unit to a predetermined reset potential supplied from a power supply line, and addition switches that are connected in series in two or more stages and each of which is disposed between the power supply line and a connection line connecting power supply line sides of the reset switches of a predetermined number of pixels, the addition switches being capable of changing, by a change in a conduction state, a region of the pixels in which addition of the charge stored in the charge storage unit is performed, and a pixel drive circuit changes a conduction state of the reset switches and the addition switches in the two or more stages according to the region of the pixels in which addition of the charge is performed.

### [Advantageous Effects of the Invention]

The present invention can flexibly change, according to the imaging scene, a pixel region in which addition of charge is performed, while preventing a large pixel size.

### [Brief Description of the Drawings]

Fig. 1 is a block diagram showing an example of a solid-state imaging element according to a first embodiment.
Fig. 2 is a diagram showing switching control of a pixel region of the solid-state imaging element according to the first embodiment.
Fig. 3A is a timing chart showing operation for imaging with no addition (single pixel) according to the first embodiment.
Fig. 3B is a timing chart showing operation for imaging with 2× addition (2 times addition) of pixels according to the first embodiment.
Fig. 3C is a timing chart showing operation for imaging with 4× addition (4 times addition) of pixels according to the first embodiment.
Fig. 4A is a diagram showing operation for imaging with no addition (single pixel) according to the first embodiment.
Fig. 4B is a diagram showing operation for imaging with 2× addition (2 times addition) of pixels according to the first embodiment.
Fig. 4C is a diagram showing operation for imaging with 4× addition (4 times addition) of pixels according to the first embodiment.
Fig. 5 is a flowchart showing an example of operation for switching control of the pixel region of the solid-state imaging element according to the first embodiment.
Fig. 6A is a diagram showing sensitivity characteristics corresponding to the number of electrons of the solid-state imaging element according to the first embodiment.
Fig. 6B is a diagram showing a sensitivity characteristic corresponding to the output voltage of the solid-state imaging element according to the first embodiment.
Fig. 7 is a block diagram showing an example of a solid-state imaging element according to a second embodiment.
Fig. 8 is a block diagram showing an example of a solid-state imaging element according to a third embodiment.
Fig. 9 is a block diagram showing an example of a solid-state imaging element according to a fourth embodiment.
Fig. 10 is a diagram showing switching control of a pixel region of the solid-state imaging element according to the fourth embodiment.
Fig. 11 is a block diagram showing an example of a solid-state imaging element according to a fifth embodiment.
Fig. 12 is a diagram showing an example of a Bayer array of RGB pixels according to the fifth embodiment.
Fig. 13 is a block diagram showing an example of a solid-state imaging element according to a sixth embodiment.
Fig. 14 is a block diagram showing an example of a solid-state imaging element according to a seventh embodiment.
Fig. 15 is a block diagram showing an example of a range imaging device according to an eighth embodiment.

### [Description of the Embodiments]

A solid-state imaging element, a range imaging device, and a control method according to some embodiments of the present invention will be described with reference to the drawings.

### [First embodiment]

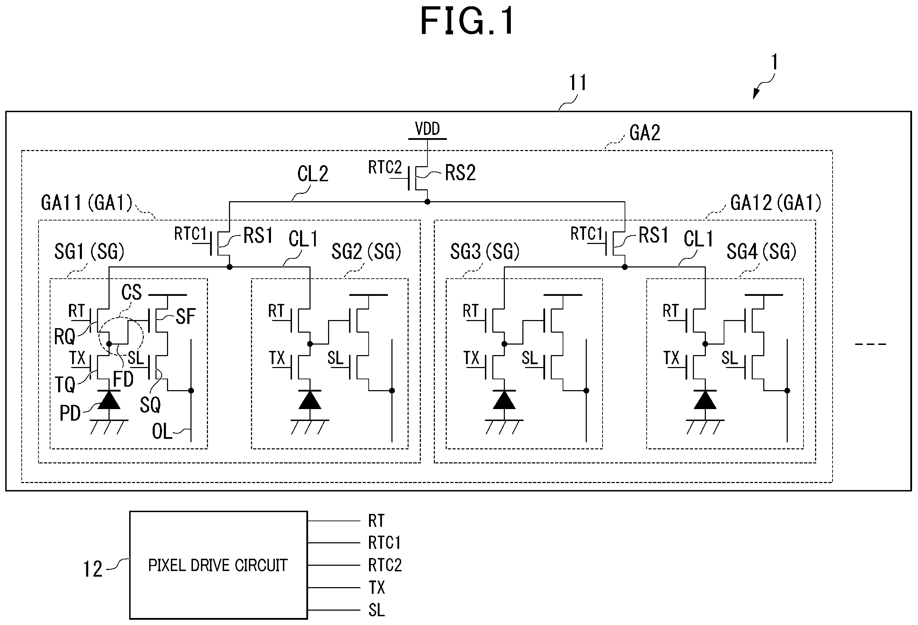

Fig. 1 is a block diagram showing an example of a solid-state imaging element 1 according to a first embodiment.

As shown in Fig. 1, the solid-state imaging element 1 includes a pixel unit 11 and a pixel drive circuit 12.

The pixel unit 11 includes a plurality of pixels SG (SG1, SG2, SG3, SG4, ...) and addition switches (addition transistor RS1, addition transistor RS2). In the pixel unit 11, for example, the plurality of pixels SG are arranged in a two-dimensional matrix to constitute a light receiving region. The pixel unit 11 enables addition of charge in units of (N × M) pixels SG (note that N and M are each an integer greater than or equal to 2). In the present embodiment, an example is described in which the pixel unit 11 enables addition of charge in units of (N × M) pixels SG, where N = 2 and M = 2, that is, (2 × 2) pixels SG.

Each of the pixels SG is a single pixel. Each of the pixels SG may be, for example, a 4-transistor pixel. Each of the pixels SG includes a photoelectric conversion device PD, a charge storage unit CS, a reset transistor RQ, a source follower transistor SF, a transfer transistor TQ, and a selection transistor SQ.

The photoelectric conversion device PD may be, for example, an embedded photodiode. The photoelectric conversion device PD performs photoelectric conversion of incident light to generate charge corresponding to the incident light. The photoelectric conversion device PD includes an anode terminal connected to a ground power supply line, and a cathode terminal connected to a source terminal of the transfer transistor TQ.

A control signal TX causes the transfer transistor TQ to be in a conductive state (ON state). Thus, the transfer transistor TQ causes charge generated by the photoelectric conversion device PD to be stored in the charge storage unit CS, and transfers charge to the source follower transistor SF.

The charge storage unit CS is a storage unit that stores charge generated by the photoelectric conversion device PD. The charge storage unit CS is a floating diffusion FD.

The source follower transistor SF is a transistor that converts charge into an electrical signal. The source follower transistor SF outputs, to the selection transistor SQ, an electrical signal (voltage) corresponding to the charge stored in the charge storage unit CS.

The selection transistor SQ selects reading of the electrical signal of the pixel SG. A control signal SL causes the selection transistor SQ to be in the conductive state (ON state). Thus, the selection transistor SQ outputs a pixel value (output signal) to an outlet line OL.

The reset transistor RQ (an example of a reset switch) resets the potential of the charge storage unit CS to a predetermined reset potential supplied from a power supply line VDD. A control signal RT causes the reset transistor RQ to be in the conductive state (ON state). Thus, the reset transistor RQ resets, via addition switches (addition transistor RS1, addition transistor RS2) (described later), the potential of the charge storage unit CS to the reset potential supplied from the power supply line VDD.

The addition switches (addition transistor RS1, addition transistor RS2) are switches that are connected in series in two or more stages and each of which is disposed between a connection line (connection line CL1, connection line CL2) and the power supply line VDD. The connection line (connection line CL1, connection line CL2) connects the power supply line VDD sides of the reset transistors RQ of a predetermined number of pixels SG. In the present embodiment, an example is described in which addition switches are provided in two stages. The addition switches (addition transistor RS1, addition transistor RS2) are capable of changing, by a change in the conduction state, a region of pixels SG in which addition of the charge stored in the charge storage unit CS is performed.

In the present embodiment, the region of pixels SG that can be changed corresponds to a single pixel SG (no addition), a 2× addition region (addition pixel region GA1 with 2 times addition), and a 4× addition region (addition pixel region GA2 with 4 times addition).

In the present embodiment, the addition switches in two or more stages are addition transistors RS1 and an addition transistor RS2. In other words, addition transistors RS1 and an addition transistor RS2 correspond to the addition switches in two or more stages. In other words, the addition switches in two or more stages include addition transistors RS1 and an addition transistor RS2.

Each of the addition transistors RS1 (first addition switches) is disposed between a connection line CL1 (first connection line) and the power supply line VDD. The connection line CL1 (first connection line) connects the power supply line VDD sides of the reset transistors RQ of N (e.g., 2) pixels SG. Each of the addition transistors RS1 includes a source terminal connected to a connection line CL1 connected to drain terminals of two reset transistors RQ, and a drain terminal connected to a connection line CL2.

Each of the addition transistors RS1 enables, via a connection line CL1 and the reset transistors RQ, addition of the charge stored in N (e.g., 2) charge storage units CS. The conduction state of each of the addition transistors RS1 is changed by a control signal RTC1.

The addition transistor RS2 (second addition switch) is disposed between the connection line CL2 (second connection line) and the power supply line VDD. The connection line CL2 (second connection line) connects the power supply line VDD sides of M (e.g., 2) addition transistors RS1. The addition transistor RS2 includes a source terminal connected to the connection line CL2 connected to drain terminals of two addition transistors RS1, and a drain terminal connected to the power supply line VDD.

The addition transistor RS2 enables, via the connection line CL2 and the addition transistors RS1, addition of addition charge in addition pixel regions GA1. Each of the addition pixel regions GA1 is a region of N (e.g., 2) pixels SG connected by a connection line CL1. The conduction state of the addition transistor RS2 is changed by a control signal RTC2.

The reset transistors RQ, the source follower transistors SF, the transfer transistors TQ, the selection transistors SQ, the addition transistors RS1, and the addition transistor RS2 each may be, for example, an NMOS transistor.

The pixel drive circuit 12 changes the conduction state of the reset transistors RQ and the addition switches (addition transistor RS1, addition transistor RS2) in two or more stages according to the region of pixels SG in which addition of charge is performed. Furthermore, the pixel drive circuit 12 performs control in which charge is transferred to the charge storage unit CS of each of the pixels SG (control of the transfer transistor TQ), control in which the potential of the charge storage unit CS of each of the pixels SG is reset to a reset potential (control of the reset transistor RQ), and control in which each of the pixels SG is selected (control of the selection transistor SQ).

The pixel drive circuit 12 outputs a control signal RT, a control signal RTC1, a control signal RTC2, a control signal TX, and a control signal SL.

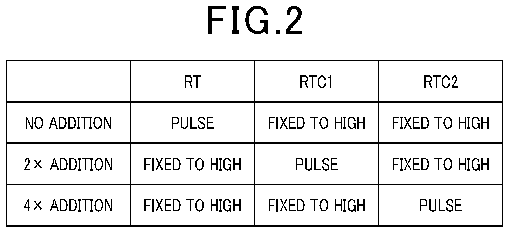

Fig. 2 is a diagram showing switching control of the pixel region of the solid-state imaging element 1 according to the present embodiment.

As shown in Fig. 2, the pixel drive circuit 12 performs switching control of the pixel region using a control signal RT, a control signal RTC1, and a control signal RTC2.

To perform imaging with no addition (single pixel SG), the pixel drive circuit 12 performs control in which the control signal RTC1 and the control signal RTC2 are fixed to the high state and a pulse signal is output as the control signal RT. In this case, the addition transistors RS1 and the addition transistor RS2 are in the conductive state (ON state), and the conduction of the reset transistors RQ is controlled by the pulse signal.

To perform imaging with 2× addition (2 times addition) of pixels SG, the pixel drive circuit 12 performs control in which the control signal RT and the control signal RTC2 are fixed to the high state and a pulse signal is output as the control signal RTC1. In this case, the reset transistors RQ and the addition transistor RS2 are in the conductive state (ON state), and the conduction of the addition transistors RS1 is controlled by the pulse signal.

To perform imaging with 4× addition (4 times addition) of pixels SG, the pixel drive circuit 12 performs control in which the control signal RT and the control signal RTC1 are fixed to the high state and a pulse signal is output as the control signal RTC2. In this case, the reset transistors RQ and the addition transistors RS1 are in the conductive state (ON state), and the conduction of the addition transistor RS2 is controlled by the pulse signal.

Next, operation of the solid-state imaging element 1 according to the present embodiment will be described with reference to the drawings.

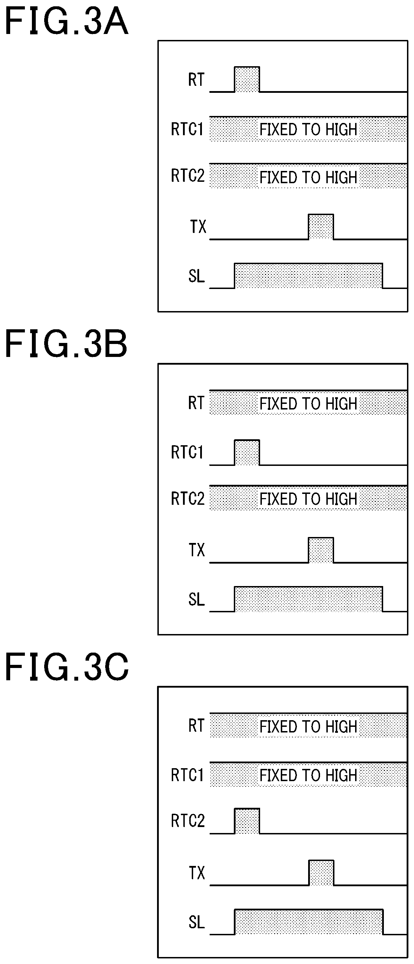

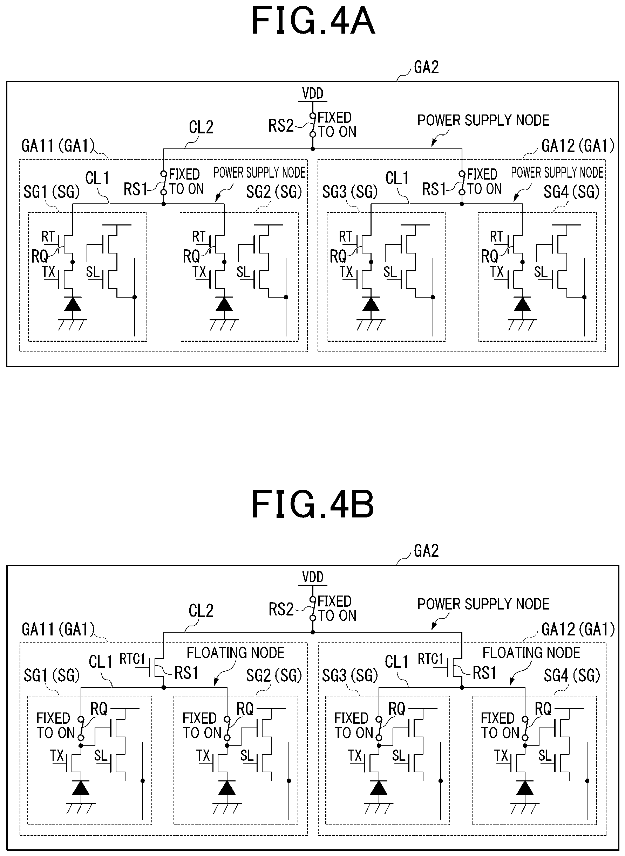

Figs. 3A to 3C are each a timing chart showing an example of switching control of the pixel region of the solid-state imaging element 1 according to the present embodiment. Figs. 4A to 4C are each a diagram showing operation for switching control of the pixel region of the solid-state imaging element 1 according to the present embodiment.

Fig. 3A is a timing chart showing operation for imaging with no addition (single pixel SG).

As shown in Fig. 3A, to perform imaging with no addition (single pixel SG), the pixel drive circuit 12 fixes the control signal RTC1 and the control signal RTC2 to the high state, causes the control signal SL to be in the high state, and outputs a pulse signal as the control signal RT. Thus, each of the pixels SG is selected, and the potential of the charge storage unit CS is reset to the potential of the power supply line VDD.

Next, the pixel drive circuit 12 outputs a pulse signal as the control signal TX. Thus, charge obtained through photoelectric conversion by the photoelectric conversion device PD is stored in the charge storage unit CS, and the pixel value of the pixel SG is output to the outlet line OL via the source follower transistor SF and the selection transistor SQ.

In this case, as shown in Fig. 4A, the addition transistors RS1 and the addition transistor RS2 are in the conductive state (ON state), and the potential of the connection lines CL1 and the connection line CL2 is the potential of the power supply line VDD (power supply node). When a pulse signal is output as the control signal RT, the potential of the charge storage units CS is reset to the potential of the power supply line VDD. The solid-state imaging element 1 outputs the pixel value of a single pixel SG (each of the pixel SG1, the pixel SG2, the pixel SG3, and the pixel SG4).

Fig. 3B is a timing chart showing operation for imaging with 2× addition (2 times addition) of pixels SG.

As shown in Fig. 3B, to perform imaging with 2× addition (2 times addition) of pixels SG, the pixel drive circuit 12 fixes the control signal RT and the control signal RTC2 to the high state, causes the control signal SL to be in the high state, and outputs a pulse signal as the control signal RTC1. Thus, each of the pixels SG is selected, and the potential of the charge storage unit CS is reset to the potential of the power supply line VDD.

Next, the pixel drive circuit 12 outputs a pulse signal as the control signal TX. Thus, charge obtained through photoelectric conversion by the photoelectric conversion device PD is added in two pixels SG and stored in the charge storage units CS, and the pixel value of the pixels SG is output to the outlet lines OL via the source follower transistors SF and the selection transistors SQ.

In this case, as shown in Fig. 4B, the reset transistors RQ and the addition transistor RS2 are in the conductive state (ON state), and after reset, the addition transistors RS1 are in the non-conduction state (OFF state). Thus, the connection lines CL1 each serve as a floating node (variable node). When a pulse signal is output as the control signal TX, the charge storage units CS of two pixels SG are added by one of the connection lines CL1. The solid-state imaging element 1 outputs the pixel value of the added value of the two pixels SG (the added value of the pixel SG1 and the pixel SG2, the added value of the pixel SG3 and the pixel SG4).

Fig. 3C is a timing chart showing operation for imaging with 4× addition (4 times addition) of pixels SG.

As shown in Fig. 3C, to perform imaging with 4× addition (4 times addition) of pixels SG, the pixel drive circuit 12 fixes the control signal RT and the control signal RTC1 to the high state, causes the control signal SL to be in the high state, and outputs a pulse signal as the control signal RTC2. Thus, each of the pixels SG is selected, and the potential of the charge storage unit CS is reset to the potential of the power supply line VDD.

Next, the pixel drive circuit 12 outputs a pulse signal as the control signal TX. Thus, charge obtained through photoelectric conversion by the photoelectric conversion device PD is added in four pixels SG and stored in the charge storage units CS, and the pixel value of the pixels SG is output to the outlet lines OL via the source follower transistors SF and the selection transistors SQ.

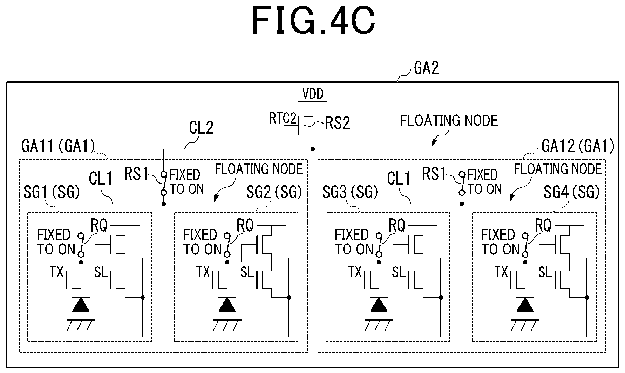

In this case, as shown in Fig. 4C, the reset transistors RQ and the addition transistors RS1 are in the conductive state (ON state), and after reset, the addition transistor RS2 is in the non-conduction state (OFF state). Thus, the connection lines CL1 and the connection line CL2 each serve as a floating node (variable node). When a pulse signal is output as the control signal TX, the charge storage units CS of four pixels SG are added by the connection lines CL1 and the connection line CL2. The solid-state imaging element 1 outputs the pixel value of the added value of the four pixels SG (the added value of the pixel SG1, the pixel SG2, the pixel SG3, and the pixel SG4).

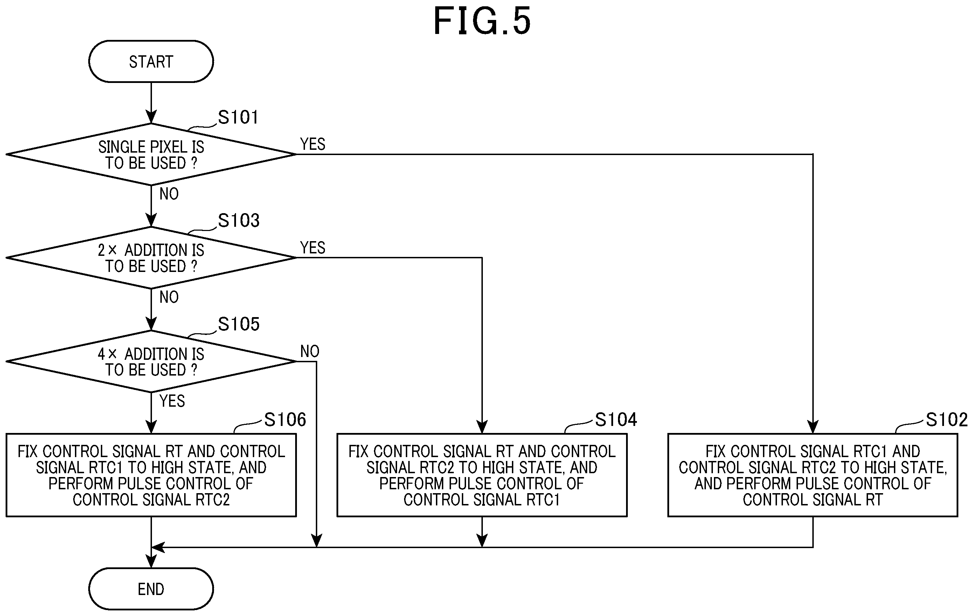

Next, a control process performed by the pixel drive circuit 12 according to the present embodiment will be described with reference to Fig. 5.

Fig. 5 is a flowchart showing an example of operation for switching control of the pixel region of the solid-state imaging element 1 according to the present embodiment.

As shown in Fig. 5, first, the pixel drive circuit 12 determines whether a single pixel (pixel SG) is to be used (step S101). In response to a determination that a single pixel (pixel SG) is to be used (YES in step S101), the pixel drive circuit 12 causes the process to proceed to step S102. In response to a determination that a single pixel (pixel SG) is not to be used (NO in step S101), the pixel drive circuit 12 causes the process to proceed to step S103.

In step S102, the pixel drive circuit 12 fixes the control signal RTC1 and the control signal RTC2 to the high state, and performs pulse control of the control signal RT. After processing in step S102, the pixel drive circuit 12 ends the process of switching control of the pixel region.

In step S103, the pixel drive circuit 12 determines whether 2× addition is to be used. In response to a determination that 2× addition is to be used (YES in step S103), the pixel drive circuit 12 causes the process to proceed to step S104. In response to a determination that 2× addition is not to be used (NO in step S103), the pixel drive circuit 12 causes the process to proceed to step S105.

In step S104, the pixel drive circuit 12 fixes the control signal RT and the control signal RTC2 to the high state, and performs pulse control of the control signal RTC1. After processing in step S104, the pixel drive circuit 12 ends the process of switching control of the pixel region.

In step S105, the pixel drive circuit 12 determines whether 4× addition is to be used. In response to a determination that 4× addition is to be used (YES in step S105), the pixel drive circuit 12 causes the process to proceed to step S106. In response to a determination that 4× addition is not to be used (NO in step S105), the pixel drive circuit 12 ends the process of switching control of the pixel region.

In step S106, the pixel drive circuit 12 fixes the control signal RT and the control signal RTC1 to the high state, and performs pulse control of the control signal RTC2. After processing in step S106, the pixel drive circuit 12 ends the process of switching control of the pixel region.

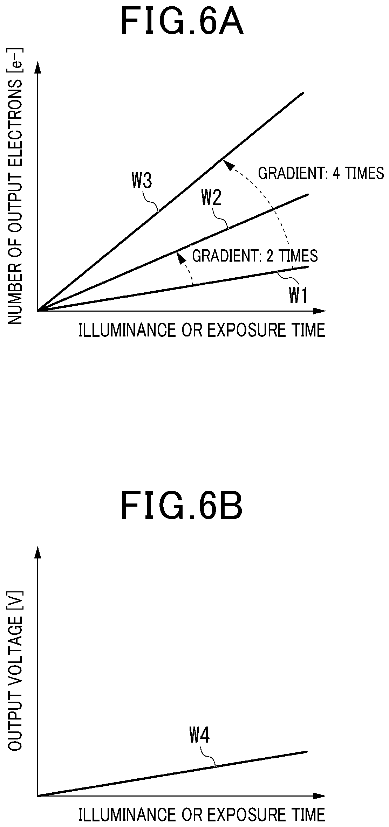

Next, effects of the addition of charge of the solid-state imaging element 1 according to the present embodiment will be described with reference to Figs. 6A and 6B.

Figs. 6A and 6B are each a diagram showing effects of the addition of charge of the solid-state imaging element 1 according to the present embodiment.

The graph in Fig. 6A shows sensitivity characteristics corresponding to the number of electrons of the solid-state imaging element 1 according to the present embodiment.

In Fig. 6A, the horizontal axis represents an illuminance or exposure time, and the vertical axis represents the number of output electrons.

A waveform W1 represents the sensitivity characteristic for a single pixel (pixel SG), a waveform W2 represents the sensitivity characteristic for 2× addition. A waveform W3 represents the sensitivity characteristic for 4× addition.

As shown in Fig. 6A, the gradient of the waveform W2 for 2× addition is 2 times the gradient of the waveform W1 for a single pixel (pixel SG), and the gradient of the waveform W3 for 4× addition is 4 times the gradient of the waveform W1 for a single pixel (pixel SG). That is, the sensitivity characteristic corresponding to the number of electrons for 2× addition is 2 times the sensitivity characteristic for a single pixel (pixel SG), and the sensitivity characteristic corresponding to the number of electrons for 4× addition is 4 times the sensitivity characteristic for a single pixel (pixel SG).

Thus, the solid-state imaging element 1 according to the present embodiment achieves higher detection sensitivity by using 2× addition or 4× addition.

The graph in Fig. 6B shows a sensitivity characteristic corresponding to the output voltage of the solid-state imaging element 1 according to the present embodiment.

In Fig. 6B, the horizontal axis represents an illuminance or exposure time, and the vertical axis represents the output voltage.

A waveform W4 represents the sensitivity characteristic for a single pixel (pixel SG), 2× addition, and 4× addition. That is, in the solid-state imaging element 1 according to the present embodiment, the gradient is the same for a single pixel (pixel SG), 2× addition, and 4× addition.

Thus, in the solid-state imaging element 1 according to the present embodiment, although the sensitivity corresponding to the number of electrons is increased, the sensitivity corresponding to the output voltage is unchanged for a single pixel (pixel SG), 2× addition, and 4× addition. That is, although the number of electrons is increased to 2 times or 4 times, the capacitance of the floating diffusion FD (charge storage unit CS) also becomes 2 times or 4 times, causing the output voltage to be unchanged. Thus, in the solid-state imaging element 1 according to the present embodiment, saturation is less likely to occur even for 4× addition. Therefore, the solid-state imaging element 1 according to the present embodiment is less influenced by noise, achieving a higher S/N ratio (signal-to-noise ratio) corresponding to the number of electrons.

As described above, the solid-state imaging element 1 according to the present embodiment is the solid-state imaging element 1 including the plurality of pixels SG, and includes the addition switches (addition transistor RS1, addition transistor RS2) and the pixel drive circuit 12. Each of the pixels SG includes a photoelectric conversion device PD that generates charge corresponding to incident light, a charge storage unit CS that stores charge, and a reset transistor RQ (reset switch) that resets the potential of the charge storage unit CS to a predetermined reset potential supplied from the power supply line VDD. The addition switches (addition transistor RS1, addition transistor RS2) are addition switches that are connected in series in two or more stages and each of which is disposed between the power supply line VDD and a connection line (connection line CL1, connection line CL2) connecting the power supply line VDD sides of the reset transistors RQ of a predetermined number of pixels SG. The addition switches are capable of changing, by a change in the conduction state, the region of pixels SG in which addition of the charge stored in the charge storage unit CS is performed. The pixel drive circuit 12 changes the conduction state of the reset transistors RQ and the addition switches (addition transistor RS1, addition transistor RS2) in two or more stages according to the region of pixels SG in which addition of charge is performed.

Thus, with a simple configuration in which the addition switches (addition transistor RS1, addition transistor RS2) are connected in series in two or more stages between the reset transistors RQ and the power supply line VDD, the solid-state imaging element 1 according to the present embodiment can perform addition of charge, while preventing a large pixel size. Furthermore, by changing the conduction state of the addition switches (addition transistor RS1, addition transistor RS2) connected in series in two or more stages and the reset transistors RQ, the solid-state imaging element 1 according to the present embodiment can flexibly change, according to the imaging scene, the pixel region in which addition of charge is performed. Thus, the solid-state imaging element 1 according to the present embodiment can flexibly change, according to the imaging scene, the pixel region in which addition of charge is performed, while preventing a large pixel size.

As described with reference to Figs. 6A and 6B, by using 2× addition or 4× addition, the solid-state imaging element 1 according to the present embodiment achieves higher detection sensitivity and is less influenced by noise. Thus, the solid-state imaging element 1 achieves a higher S/N ratio (signal-to-noise ratio) corresponding to the number of electrons.

In the present embodiment, the addition switches in two or more stages are the addition transistors RS1 (first addition switches) and the addition transistor RS2 (second addition switch). Each of the addition transistors RS1 (first addition switches) is disposed between the power supply line VDD and a first connection line connecting the power supply line VDD sides of the reset transistors RQ of N (e.g., 2) pixels SG, and enables, via the connection line CL1 (first connection line) and the reset transistors RQ, addition of the charge stored in N charge storage units CS (note that N is an integer greater than or equal to 2). The addition transistor RS2 (second addition switch) is disposed between the power supply line VDD and the connection line CL2 (second connection line) connecting the power supply line VDD sides of M (e.g., 2) addition transistors RS1, and enables, via the connection line CL2 and the addition transistors RS1, addition of addition charge in the addition pixel regions GA1 each of which is a region of N pixels SG connected by the connection line CL1 (note that M is an integer greater than or equal to 2). The pixel drive circuit 12 changes the conduction state of the reset transistors RQ, the addition transistors RS1, and the addition transistor RS2 according to the region of pixels SG in which addition of charge is performed.

Thus, the solid-state imaging element 1 according to the present embodiment can use, by switching, the pixel region (detection region) of any of a single pixel SG, N pixels SG (e.g., 2 pixels SG: 2× addition), and (N × M) pixels SG (2 × 2 = 4 pixels SG: 4× addition). Therefore, the solid-state imaging element 1 according to the present embodiment can flexibly change, according to the imaging scene, the pixel region in which addition of charge is performed.

In the present embodiment, each of the pixels SG is a 4-transistor pixel including a reset transistor RQ that is a reset switch, a source follower transistor SF that converts charge into an electrical signal, a transfer transistor TQ that transfers charge to the source follower transistor SF, and a selection transistor SQ that selects reading of the electrical signal of a corresponding one of the pixels SG.

Thus, by using the 4-transistor pixels, the solid-state imaging element 1 according to the present embodiment can flexibly change, according to the imaging scene, the pixel region by addition of charge. The solid-state imaging element 1 according to the present embodiment achieves addition of charge by additionally including the addition switches (addition transistor RS1, addition transistor RS2) without changing the configuration of the pixels SG.

The control method according to the present embodiment is a method of controlling the solid-state imaging element 1 including the plurality of pixels SG each of which includes a photoelectric conversion device PD that generates charge corresponding to incident light, a charge storage unit CS that stores charge, and a reset transistor RQ that resets the potential of the charge storage unit CS to a predetermined reset potential supplied from the power supply line VDD. The solid-state imaging element 1 includes the addition switches (addition transistor RS1, addition transistor RS2) that are connected in series in two or more stages and each of which is disposed between the power supply line VDD and a connection line (connection line CL1, connection line CL2) connecting the power supply line VDD sides of the reset transistors RQ of a predetermined number of pixels SG. The addition switches are capable of changing, by a change in the conduction state, the region of pixels SG in which addition of the charge stored in the charge storage unit CS is performed. In the control method, the pixel drive circuit 12 changes the conduction state of the reset transistors RQ and the addition switches (addition transistor RS1, addition transistor RS2) in two or more stages according to the region of pixels SG in which addition of charge is performed.

Thus, the control method according to the present embodiment has the same effects as the solid-state imaging element 1 described above, and can flexibly change, according to the imaging scene, the pixel region in which addition of charge is performed, while preventing a large pixel size.

### [Second embodiment]

Next, a solid-state imaging element 1a according to a second embodiment will be described with reference to the drawings.

In the second embodiment, a modification is described in which (4 × 2) pixels SG are applied to the (N × M) pixels SG described above.

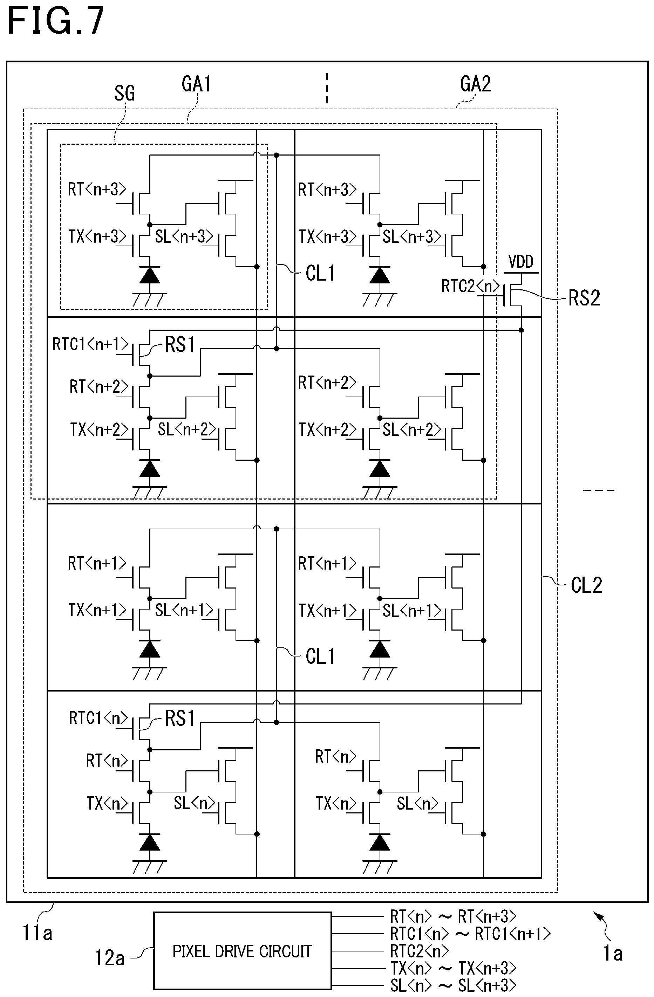

Fig. 7 is a block diagram showing an example of the solid-state imaging element 1a according to the second embodiment.

As shown in Fig. 7, the solid-state imaging element 1a includes a pixel unit 11a and a pixel drive circuit 12a.

In the pixel unit 11a, a plurality of pixels SG are arranged in a two-dimensional matrix. The pixel unit 11a includes the plurality of pixels SG and addition switches (addition transistor RS1, addition transistor RS2).

In the present embodiment, an addition transistor RS1 (first addition switch) is provided for every (2 × 2 = 4) pixels SG, and drain terminals of the reset transistors RQ of the (2 × 2 = 4) pixels SG are connected to a source terminal of the addition transistor RS1 by a connection line CL1 (first connection line). The addition transistor RS1 and the connection line CL1 enable addition of the (2 × 2 = 4) pixels SG (4× addition).

Furthermore, an addition transistor RS2 (second addition switch) is provided for two addition transistors RS1 (first addition switches), and drain terminals of the two addition transistors RS1 are connected to a source terminal of the addition transistor RS2 by a connection line CL2 (second connection line). The addition transistors RS1 and the connection lines CL1 and the addition transistor RS2 and the connection line CL2 enable addition of (2 × 2 × 2 = 8) pixels SG (8× addition).

In the present embodiment, the region of pixels SG that can be changed corresponds to a single pixel SG (no addition), a 4× addition region (addition pixel region GA1 with 4 times addition), and an 8× addition region (addition pixel region GA2 with 8 times addition).

The pixel drive circuit 12a is a circuit that drives the pixel unit 11a. A basic function and control of the pixel drive circuit 12a are the same as those of the pixel drive circuit 12 described above. The pixel drive circuit 12a is capable of controlling a control signal individually for each pixel SG, each addition transistor RS1, and each addition transistor RS2. The pixel drive circuit 12a outputs control signals RT<n> to RT<n + 3>, control signals RTC1<n> to RTC1<n + 1>, a control signal RTC2<n>, control signals TX<n> to TX<n + 1>, and control signals SL<n> to SL<n + 3> (note that n is an integer).

As described above, the present embodiment is a modification in which N pixels SG of the (N × M) pixels SG are (2 × 2 = 4) adjacent pixels SG, and M is 2.

Thus, the solid-state imaging element 1a according to the present embodiment can detect a pixel value by a single pixel SG (no addition), a 4× addition region (addition pixel region GA1 with 4 times addition), and an 8× addition region (addition pixel region GA2 with 8 times addition). The solid-state imaging element 1a according to the present embodiment has the same effects as the solid-state imaging element 1 according to the first embodiment, and can perform, according to the imaging scene, flexible switching between a single pixel SG (no addition), a 4× addition region (addition pixel region GA1 with 4 times addition), and an 8× addition region (addition pixel region GA2 with 8 times addition).

In the example described in the above embodiment, (N × M) is (4 × 2); however, the present embodiment is not limited to this. Each of N and M may be another numerical value that is an integer greater than or equal to 2. In the example described in the above embodiment, the N pixels SG are (2 × 2) pixels SG; however, the present embodiment is not limited to this. The N pixels SG may be pixels SG having any configuration in a two-dimensional matrix, such as (2 × 3) pixels SG or (4 × 4) pixels SG.

### [Third embodiment]

Next, a solid-state imaging element 1b according to a third embodiment will be described with reference to the drawings.

In the third embodiment, a modification is described in which the N pixels SG described above are composed of pixels SG ((1 × n) pixels SG) in a line.

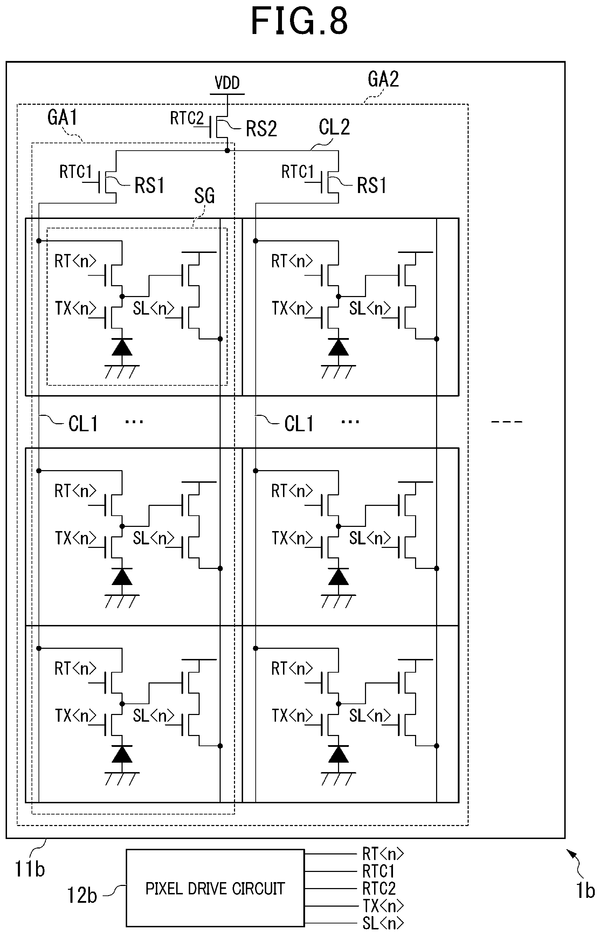

Fig. 8 is a block diagram showing an example of the solid-state imaging element 1b according to the third embodiment.

As shown in Fig. 8, the solid-state imaging element 1b includes a pixel unit 11b and a pixel drive circuit 12b.

In the pixel unit 11b, a plurality of pixels SG are arranged in a two-dimensional matrix. The pixel unit 11b includes the plurality of pixels SG and addition switches (addition transistor RS1, addition transistor RS2).

In the present embodiment, an addition transistor RS1 (first addition switch) is provided for every (1 × n = n) pixels SG in a line, and drain terminals of the reset transistors RQ of the n pixels SG are connected to a source terminal of the addition transistor RS1 by a connection line CL1 (first connection line). The addition transistor RS1 and the connection line CL1 enable addition of the (1 × n = n) pixels SG (n× addition).

Furthermore, an addition transistor RS2 (second addition switch) is provided for two addition transistors RS1 (first addition switches), and drain terminals of the two addition transistors RS1 are connected to a source terminal of the addition transistor RS2 by a connection line CL2 (second connection line). The addition transistors RS1 and the connection lines CL1 and the addition transistor RS2 and the connection line CL2 enable addition of (1 × n × 2 = 2n) pixels SG (2n× addition).

In the present embodiment, the region of pixels SG that can be changed corresponds to a single pixel SG (no addition), an n× addition region (addition pixel region GA1 with n times addition), and a 2n× addition region (addition pixel region GA2 with 2n times addition). Addition pixel regions GA1 are linearly connected and serve as a line sensor.

The pixel drive circuit 12b is a circuit that drives the pixel unit 11b. A basic function and control of the pixel drive circuit 12b are the same as those of the pixel drive circuit 12 described above. The pixel drive circuit 12b outputs a control signal RT<n>, a control signal RTC1<n>, a control signal RTC2<n>, a control signal TX<n>, and a control signal SL<n> (note that n is an integer).

As described above, in the present embodiment, addition pixel regions GA1 are linearly connected and serve as a line sensor.

Thus, the solid-state imaging element 1b according to the present embodiment can perform switching between the line sensor and an area sensor.

The solid-state imaging element 1b according to the present embodiment has the same effects as the solid-state imaging element 1 according to the first embodiment, and can perform, according to the imaging scene, flexible switching between a single pixel SG (no addition), a linear n× addition region (linear addition pixel region GA1 with n times addition), and a 2n× addition region (addition pixel region GA2 with 2n times addition).

In the example described in the above embodiment, linear addition in the longitudinal direction is performed; however, the present embodiment is not limited to this. The present embodiment may have a configuration in which linear addition in the lateral direction is performed.

### [Fourth embodiment]

Next, a solid-state imaging element 1c according to a fourth embodiment will be described with reference to the drawings.

In the fourth embodiment, a modification is described in which the addition switches described above are addition switches connected in series in three stages.

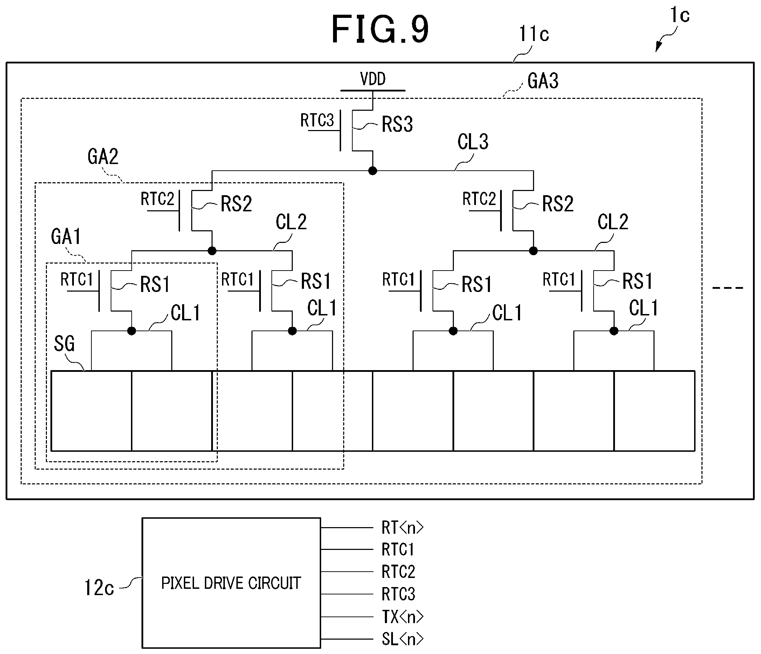

Fig. 9 is a block diagram showing an example of the solid-state imaging element 1c according to the fourth embodiment.

As shown in Fig. 9, the solid-state imaging element 1c includes a pixel unit 11c and a pixel drive circuit 12c.

In the pixel unit 11c, a plurality of pixels SG are arranged. The pixel unit 11c includes the plurality of pixels SG and addition switches (addition transistor RS1, addition transistor RS2, addition transistor RS3). In the pixel unit 11c, addition switches (addition transistor RS1, addition transistor RS2, addition transistor RS3) in three stages are connected between the power supply line VDD and drain terminals of the reset transistors RQ of the pixels SG. That is, in the present embodiment, the addition switches in two or more stages are addition transistors RS1, addition transistors RS2, and an addition transistor RS3. In other words, addition transistors RS1, addition transistors RS2, and an addition transistor RS3 correspond to the addition switches in two or more stages. In other words, the addition switches in two or more stages include addition transistors RS1, addition transistors RS2, and an addition transistor RS3.

Each of the addition transistors RS1 (first addition switches) is disposed between a connection line CL1 (first connection line) and the power supply line VDD. The connection line CL1 (first connection line) connects the power supply line VDD sides of the reset transistors RQ of N (e.g., 2) pixels SG. Each of the addition transistors RS1 includes a source terminal connected to a connection line CL1 connected to drain terminals of two reset transistors RQ, and a drain terminal connected to a connection line CL2.

The addition transistor RS2 (second addition switch) is disposed between the connection line CL2 (second connection line) and the power supply line VDD. The connection line CL2 (second connection line) connects the power supply line VDD sides of M (e.g., 2) addition transistors RS1. Each of the addition transistors RS2 includes a source terminal connected to a connection line CL2 connected to drain terminals of two addition transistors RS1, and a drain terminal connected to a connection line CL3.

The addition transistor RS3 (third addition switch) is disposed between the connection line CL3 (third connection line) and the power supply line VDD. The connection line CL3 (third connection line) connects the power supply line VDD sides of L (e.g., 2) addition transistors RS2. The addition transistor RS3 includes a source terminal connected to the connection line CL3 connected to drain terminals of two addition transistors RS2, and a drain terminal connected to the power supply line VDD.

The addition transistor RS3 enables, via the connection line CL3 and the addition transistors RS2, addition of addition charge in addition pixel regions GA2. Each of the addition pixel regions GA2 is a region of (N × M) (e.g., 2 × 2 = 4) pixels SG connected by a connection line CL2. The conduction state of the addition transistor RS3 is changed by a control signal RTC3.

The addition transistors RS1, the addition transistors RS2, and the addition transistor RS3 each may be, for example, an NMOS transistor.

The pixel drive circuit 12c changes the conduction state of the reset transistors RQ and the addition switches (addition transistor RS1, addition transistor RS2, addition transistor RS3) in three stages according to the region of pixels SG in which addition of charge is performed. Furthermore, the pixel drive circuit 12c performs control in which charge is transferred to the charge storage unit CS of each of the pixels SG (control of the transfer transistor TQ), control in which the potential of the charge storage unit CS of each of the pixels SG is reset to a reset potential (control of the reset transistor RQ), and control in which each of the pixels SG is selected (control of the selection transistor SQ).

The pixel drive circuit 12c outputs a control signal RT<n>, a control signal RTC1, a control signal RTC2, a control signal RTC3, a control signal TX<n>, and a control signal SL<n> (note that n is an integer).

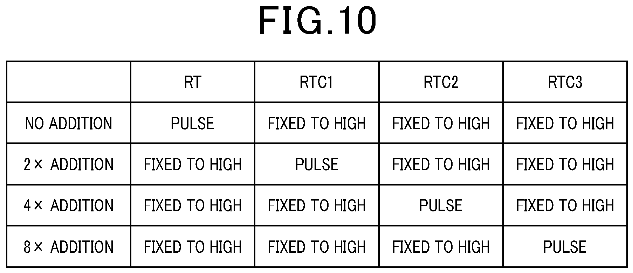

Fig. 10 is a diagram showing switching control of the pixel region of the solid-state imaging element 1c according to the present embodiment.

As shown in Fig. 10, the pixel drive circuit 12c performs switching control of the pixel region using a control signal RT, a control signal RTC1, a control signal RTC2, and a control signal RTC3.

To perform imaging with no addition (single pixel SG), the pixel drive circuit 12c performs control in which the control signal RTC1, the control signal RTC2, and the control signal RTC3 are fixed to the high state and a pulse signal is output as the control signal RT. In this case, the addition transistors RS1, the addition transistors RS2, and the addition transistor RS3 are in the conductive state (ON state), and the conduction of the reset transistors RQ is controlled by the pulse signal.

To perform imaging with 2× addition (2 times addition) of pixels SG, the pixel drive circuit 12c performs control in which the control signal RT, the control signal RTC2, and the control signal RTC3 are fixed to the high state and a pulse signal is output as the control signal RTC1. In this case, the reset transistors RQ, the addition transistors RS2, and the addition transistor RS3 are in the conductive state (ON state), and the conduction of the addition transistors RS1 is controlled by the pulse signal.

To perform imaging with 4× addition (4 times addition) of pixels SG, the pixel drive circuit 12c performs control in which the control signal RT, the control signal RTC1, and the control signal RTC3 are fixed to the high state and a pulse signal is output as the control signal RTC2. In this case, the reset transistors RQ, the addition transistors RS1, and the addition transistor RS3 are in the conductive state (ON state), and the conduction of the addition transistors RS2 is controlled by the pulse signal.

To perform imaging with 8× addition (8 times addition) of pixels SG, the pixel drive circuit 12c performs control in which the control signal RT, the control signal RTC1, and the control signal RTC2 are fixed to the high state and a pulse signal is output as the control signal RTC3. In this case, the reset transistors RQ, the addition transistors RS1, and the addition transistors RS2 are in the conductive state (ON state), and the conduction of the addition transistor RS3 is controlled by the pulse signal.

Thus, by using the reset transistors RQ of the pixels SG, and the addition switches (addition transistor RS1, addition transistor RS2, and addition transistor RS3) in three stages, the solid-state imaging element 1c according to the present embodiment can detect a pixel value by a single pixel SG (no addition), a 2× addition region (addition pixel region GA1 with 2 times addition), a 4× addition region (addition pixel region GA2 with 4 times addition), and an 8× addition region (addition pixel region GA3 with 8 times addition). That is, the solid-state imaging element 1c according to the present embodiment has the same effects as the solid-state imaging element 1 according to the first embodiment, and can perform, according to the imaging scene, flexible switching between a single pixel SG (no addition), a 2× addition region (addition pixel region GA1 with 2 times addition), a 4× addition region (addition pixel region GA2 with 4 times addition), and an 8× addition region (addition pixel region GA3 with 8 times addition).

In the example described in the present embodiment, addition switches in three stages are included as an example of the addition switches in two or more stages; however, the present embodiment is not limited to this. The present embodiment may have a configuration including addition switches in n stages (note that n is an integer greater than or equal to 2).

### [Fifth embodiment]

Next, a solid-state imaging element 1d according to a fifth embodiment will be described with reference to the drawings.

In the fifth embodiment, a modification is described in which instead of addition of adjacent pixels SG, addition of alternate pixels SG is performed.

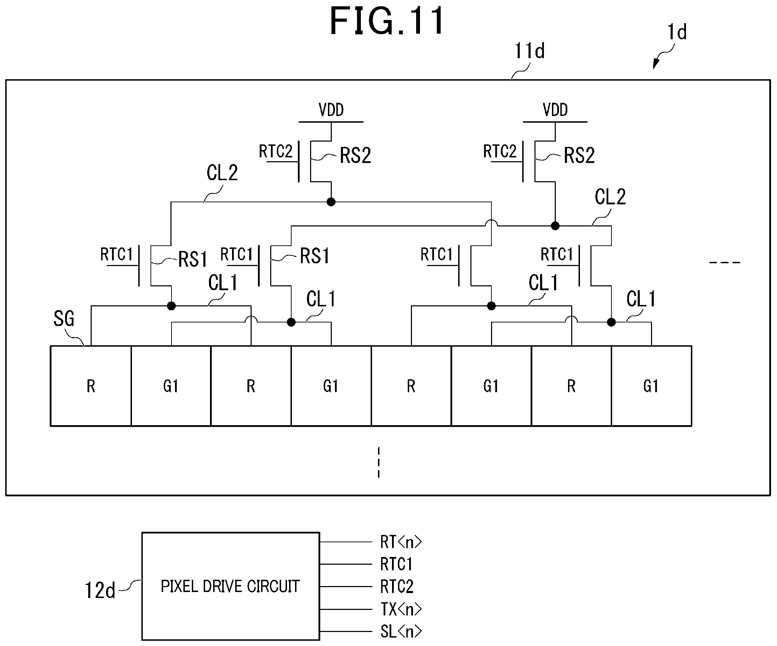

Fig. 11 is a block diagram showing an example of the solid-state imaging element 1d according to the fifth embodiment.

As shown in Fig. 11, the solid-state imaging element 1d includes a pixel unit 11d and a pixel drive circuit 12d. The solid-state imaging element 1d may be, for example, a color image sensor. The solid-state imaging element 1d can detect a color image.

In the pixel unit 11d, a plurality of pixels SG are arranged in a two-dimensional matrix to constitute a light receiving region. The plurality of pixels SG are arranged to form a Bayer array of the three primary colors of light (R (red), G (green), B (blue)). The pixel unit 11d includes the plurality of pixels SG and addition switches (addition transistor RS1, addition transistor RS2).

In the present embodiment, a connection line CL1 connects two alternate pixels SG, and is connected to an addition transistor RS1. That is, connection lines CL1 and connection lines CL2 are connected to perform addition of pixels that are not adjacent to each other. Thus, each of the connection lines CL1 is connected to perform addition of pixels of the same primary color of the three primary colors R, G, and B.

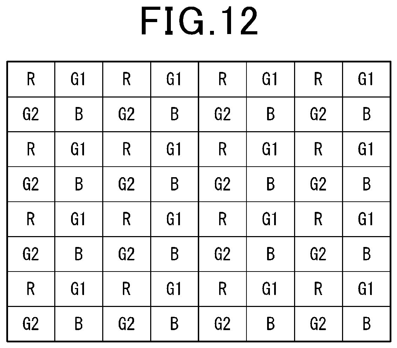

Fig. 12 is a diagram showing an example of a Bayer array of RGB pixels according to the present embodiment.

As shown in Fig. 12, the plurality of pixels SG of the pixel unit 11d are arranged so that pixels SG of R (red) and pixels SG of G1 (green) are alternately arranged in one line and pixels SG of G2 (green) and pixels SG of B (blue) are alternately arranged in the next line. Thus, in the Bayer array, pixels SG of the same primary color are alternately arranged.

In the present embodiment, each of the connection lines CL1 connects two alternate pixels SG, and thus enables addition of pixels SG of the same primary color (e.g., R (red) and R (red), G1 (green) and G1 (green), G2 (green) and G2 (green), B (blue) and B (blue)). In the pixel unit 11d, it is possible to detect a pixel value by a single pixel SG (no addition), a 2× addition region of the same color, and a 4× addition region of the same color.

The pixel drive circuit 12d is a circuit that drives the pixel unit 11d. A basic function and control of the pixel drive circuit 12d are the same as those of the pixel drive circuit 12 described above. The pixel drive circuit 12d performs control to perform addition of pixels of the same primary color of R (red), G (green) (G1, G2), and B (blue). The pixel drive circuit 12d outputs a control signal RT<n>, a control signal RTC1, a control signal RTC2, a control signal TX<n>, and a control signal SL<n> (note that n is an integer).

As described above, in the present embodiment, the connection lines CL1 (first connection lines) and the connection lines CL2 (second connection lines) are connected to perform addition of pixels that are not adjacent to each other of the plurality of pixels SG.

Thus, the solid-state imaging element 1d according to the present embodiment can flexibly switch addition of pixels that are not adjacent to each other.

In the present embodiment, as the plurality of pixels SG, the pixels SG of the three primary colors of light are arranged in a Bayer array, and each of the connection lines CL1 is connected to perform addition of pixels of the same primary color of the Bayer array.

Thus, the solid-state imaging element 1d according to the present embodiment can perform addition of the charge of pixels SG of the same primary color. Therefore, in detection of a color image, the solid-state imaging element 1d can perform, for example, flexible switching between a single pixel SG (no addition), 2× addition, and 4× addition. The solid-state imaging element 1d according to the present embodiment achieves higher sensitivity for color image detection, for example, by using 2× addition or 4× addition.

In the example described in the present embodiment, a color image sensor having a Bayer array is described as an example of addition of alternate pixels SG each of which is a single pixel; however, the present embodiment is not limited to this. Addition of alternate pixels SG that are not color pixels may be performed. Instead of addition of alternate pixels, addition of pixels in two or more alternate stages (e.g., n stages (note that n is an integer greater than or equal to 2)) may be performed.

### [Sixth embodiment]

Next, a solid-state imaging element 1e according to a sixth embodiment will be described with reference to the drawings.

In the sixth embodiment, a modification is described in which instead of a 4-transistor pixel (pixel SG), a 3-transistor pixel is applied.

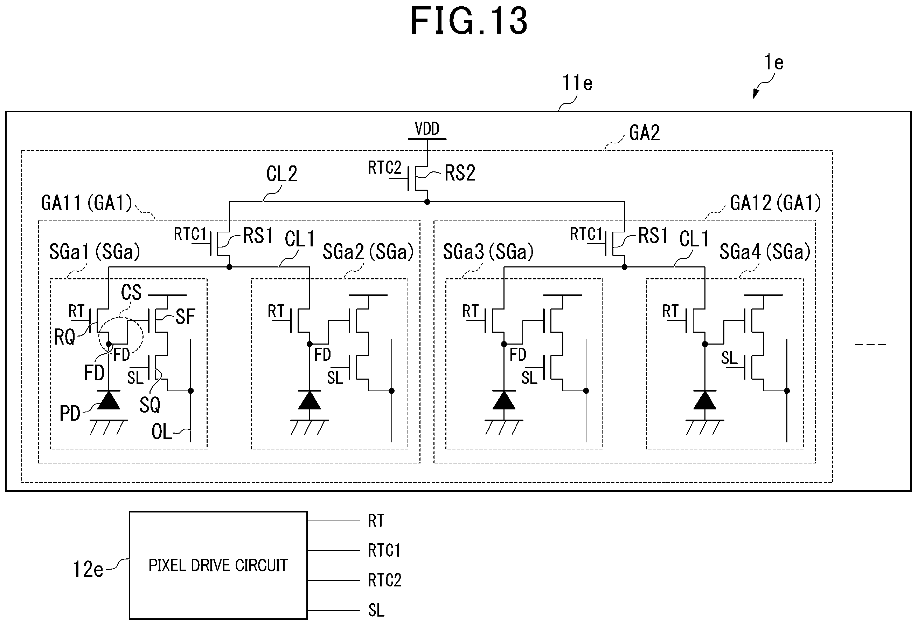

Fig. 13 is a block diagram showing an example of the solid-state imaging element 1e according to the sixth embodiment.

As shown in Fig. 13, the solid-state imaging element 1e includes a pixel unit 11e and a pixel drive circuit 12e.

The pixel unit 11e includes a plurality of pixels SGa (SGa1, SGa2, SGa3, SGa4, ...) and addition switches (addition transistor RS1, addition transistor RS2). In the pixel unit 11e, for example, the plurality of pixels SGa are arranged in a two-dimensional matrix to constitute a light receiving region.

The pixel unit 11e is the same as the pixel unit 11 shown in Fig. 1, except that instead of the plurality of pixels SG, the plurality of pixels SGa are used. Thus, detailed description of the pixel unit 11e is omitted.

Each of the pixels SGa is a 3-transistor pixel including a reset transistor RQ that is a reset switch, a source follower transistor SF that converts charge into an electrical signal, and a selection transistor SQ that selects reading of the electrical signal of a corresponding one of the pixels SGa. The pixels SGa are the same as the pixels SG, except that the pixels SGa do not include a transfer transistor TQ. Thus, detailed description of the pixels SGa is omitted here.

The pixel drive circuit 12e changes the conduction state of the reset transistors RQ and the addition switches (addition transistor RS1, addition transistor RS2) in two or more stages according to the region of pixels SGa in which addition of charge is performed. Furthermore, the pixel drive circuit 12e performs control in which the potential of the charge storage unit CS of each of the pixels SGa is reset to a reset potential (control of the reset transistor RQ), and control in which each of the pixels SG is selected (control of the selection transistor SQ).

The pixel drive circuit 12e outputs a control signal RT, a control signal RTC1, a control signal RTC2, and a control signal SL, and performs the same control as the pixel drive circuit 12 of the first embodiment, except that the pixel drive circuit 12e does not output a control signal TX.

As described above, the solid-state imaging element 1e according to the present embodiment includes the plurality of pixels SGa. Each of the pixels SGa is a 3-transistor pixel including a reset transistor RQ that is a reset switch, a source follower transistor SF that converts charge into an electrical signal, and a selection transistor SQ that selects reading of the electrical signal of a corresponding one of the pixels SGa.

Thus, by using the 3-transistor pixels, the solid-state imaging element 1e according to the present embodiment can flexibly change, according to the imaging scene, the pixel region by addition of charge. The solid-state imaging element 1e according to the present embodiment achieves addition of charge by additionally including the addition switches (addition transistor RS1, addition transistor RS2) without changing the configuration of the pixels SGa.

In the example described in the present embodiment, as an example, a 3-transistor pixel is applied to the first embodiment. However, a 3-transistor pixel may be applied to the second to fifth embodiments in the same manner.

### [Seventh embodiment]

Next, a solid-state imaging element 1f according to a seventh embodiment will be described with reference to the drawings.

In the seventh embodiment, a modification is described in which a multi-tap pixel that enables charge to be distributed and stored in a plurality of charge storage units CS is applied.

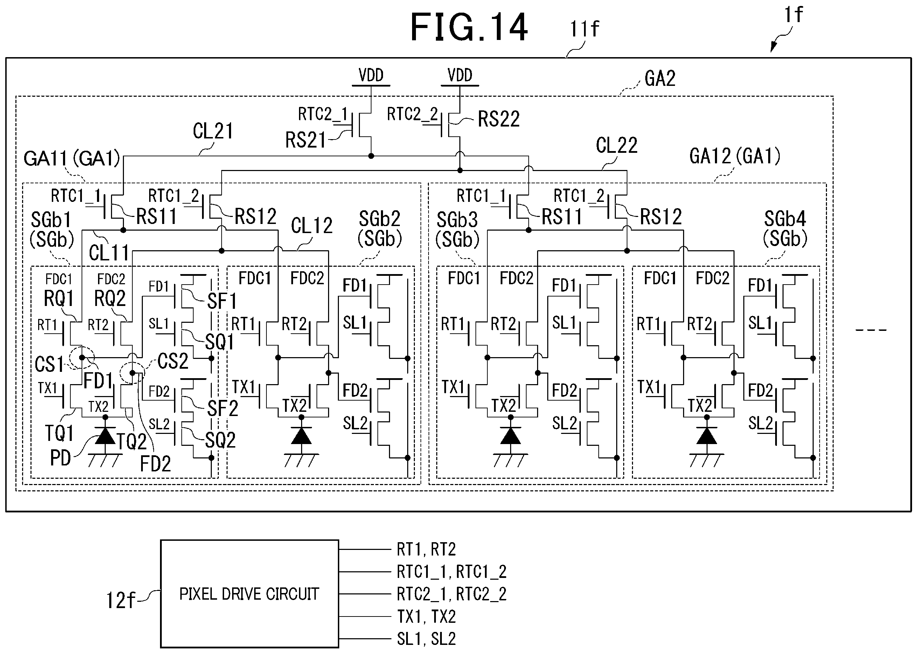

Fig. 14 is a block diagram showing an example of the solid-state imaging element 1f according to the seventh embodiment.

As shown in Fig. 14, the solid-state imaging element 1f includes a pixel unit 11f and a pixel drive circuit 12f.

The pixel unit 11f includes a plurality of pixels SGb (SGb1, SGb2, SGb3, SGb4, ...) and addition switches (addition transistor RS11, addition transistor RS12, addition transistor RS21, addition transistor RS22). In the pixel unit 11f, for example, the plurality of pixels SGb are arranged in a two-dimensional matrix to constitute a light receiving region.

Each of the pixels SGb includes a plurality of charge storage units CS (e.g., a charge storage unit CS1 and a charge storage unit CS2). Each of the pixels SGb is a pixel that enables charge to be distributed and stored in each of the charge storage units CS. Each of the pixels SGb includes a single photoelectric conversion device PD and two element sets. Each of the element sets includes charge storage units CS, reset transistors RQ, source follower transistors SF, transfer transistors TQ, and selection transistors SQ.

The photoelectric conversion device PD may be, for example, an embedded photodiode. The photoelectric conversion device PD performs photoelectric conversion of incident light to generate charge corresponding to the incident light. The photoelectric conversion device PD includes an anode terminal connected to a ground power supply line, and a cathode terminal connected to source terminals of two transfer transistors TQ (a transfer transistor TQ1 and a transfer transistor TQ2).

A control signal TX1 causes the transfer transistor TQ1 to be in the conductive state (ON state). Thus, the transfer transistor TQ1 causes charge generated by the photoelectric conversion device PD to be stored in the charge storage unit CS1, and transfers charge to a source follower transistor SF1.

A control signal TX2 causes the transfer transistor TQ2 to be in the conductive state (ON state). Thus, the transfer transistor TQ2 causes charge generated by the photoelectric conversion device PD to be stored in the charge storage unit CS2, and transfers charge to a source follower transistor SF2.

The charge storage unit CS1 is a storage unit in which charge generated by the photoelectric conversion device PD is distributed and stored. The charge storage unit CS1 is a floating diffusion FD1.

The charge storage unit CS2 is a storage unit in which charge generated by the photoelectric conversion device PD is distributed and stored. The charge storage unit CS2 is a floating diffusion FD2.

The source follower transistor SF1 is a transistor that converts charge into an electrical signal. The source follower transistor SF1 outputs, to a selection transistor SQ1, an electrical signal (voltage) corresponding to the charge stored in the charge storage unit CS1.

The source follower transistor SF2 is a transistor that converts charge into an electrical signal. The source follower transistor SF2 outputs, to a selection transistor SQ2, an electrical signal (voltage) corresponding to the charge stored in the charge storage unit CS2.

The selection transistor SQ1 selects reading of the electrical signal for the charge storage unit CS1 of the pixel SGb. A control signal SL1 causes the selection transistor SQ1 to be in the conductive state (ON state). Thus, the selection transistor SQ1 outputs a pixel value (output signal) to an outlet line.

The selection transistor SQ2 selects reading of the electrical signal for the charge storage unit CS2 of the pixel SGb. A control signal SL2 causes the selection transistor SQ2 to be in the conductive state (ON state). Thus, the selection transistor SQ2 outputs a pixel value (output signal) to an outlet line.

A reset transistor RQ1 (an example of a reset switch) resets the potential of the charge storage unit CS1 to a predetermined reset potential supplied from a power supply line VDD. A control signal RT1 causes the reset transistor RQ1 to be in the conductive state (ON state). Thus, the reset transistor RQ1 resets, via addition switches (addition transistor RS11, addition transistor RS21) (described later), the potential of the charge storage unit CS1 to the reset potential supplied from the power supply line VDD.

A reset transistor RQ2 (an example of a reset switch) resets the potential of the charge storage unit CS2 to a predetermined reset potential supplied from a power supply line VDD. A control signal RT2 causes the reset transistor RQ2 to be in the conductive state (ON state). Thus, the reset transistor RQ2 resets, via addition switches (addition transistor RS12, addition transistor RS22) (described later), the potential of the charge storage unit CS2 to the reset potential supplied from the power supply line VDD.

The addition switches (addition transistor RS11, addition transistor RS21) are switches that are connected in series in two or more stages and each of which is disposed between a connection line (connection line CL11, connection line CL21) and the power supply line VDD. The connection line (connection line CL11, connection line CL21) connects the power supply line VDD sides of the reset transistors RQ1 of a predetermined number of pixels SGb. In the present embodiment, an example is described in which addition switches are provided in two stages. The addition switches (addition transistor RS11, addition transistor RS21) are capable of changing, by a change in the conduction state, a region of pixels SGb in which addition of the charge stored in the charge storage unit CS1 is performed.

The addition switches (addition transistor RS12, addition transistor RS22) are switches that are connected in series in two or more stages and each of which is disposed between a connection line (connection line CL12, connection line CL22) and the power supply line VDD. The connection line (connection line CL12, connection line CL22) connects the power supply line VDD sides of the reset transistors RQ2 of a predetermined number of pixels SGb. The addition switches (addition transistor RS12, addition transistor RS22) are capable of changing, by a change in the conduction state, a region of pixels SGb in which addition of the charge stored in the charge storage unit CS2 is performed.

In the present embodiment, the region of pixels SGb that can be changed corresponds to a single pixel SGb (no addition), a 2× addition region (addition pixel region GA1 with 2 times addition), and a 4× addition region (addition pixel region GA2 with 4 times addition). The 2× addition region (addition pixel region GA1 with 2 times addition) corresponds to an addition pixel region GA11 and an addition pixel region GA12.

The pixel drive circuit 12f is a circuit that drives the pixel unit 11f. A basic function and control of the pixel drive circuit 12f are the same as those of the pixel drive circuit 12 described above. In the present embodiment, each of the pixels SGb includes two charge storage units CS (charge storage unit CS1, charge storage unit CS2), and an additional process is performed in which charge is distributed and stored in each of the charge storage units CS.

The pixel drive circuit 12f outputs a control signal RT1, a control signal RTC1_1, a control signal RTC2_1, a control signal TX1, and a control signal SL1 for the charge storage unit CS1, and a control signal RT2, a control signal RTC1_2, a control signal RTC2_2, a control signal TX2, and a control signal SL2 for the charge storage unit CS2.

As described above, the solid-state imaging element 1f according to the present embodiment includes the plurality of pixels SGb. Each of the pixels SGb is a pixel (multi-tap pixel) that includes the plurality of charge storage units CS (e.g., the charge storage unit CS1 and the charge storage unit CS2) and enables charge to be distributed and stored in each of the charge storage units CS. The pixel drive circuit 12f causes charge to be distributed and stored in each of the charge storage units CS.

Thus, by using the multi-tap pixels, the solid-state imaging element 1f according to the present embodiment can flexibly change, according to the imaging scene, the pixel region by addition of charge. The solid-state imaging element 1f according to the present embodiment achieves addition of charge by additionally including the addition switches (addition transistor RS11, addition transistor RS12, addition transistor RS21, addition transistor RS22) without changing the configuration of the pixels SGb.

In the example described in the above embodiment, each pixel includes two charge storage unit CS (2-tap); however, the present embodiment is not limited to this. The present embodiment may be applied to a pixel in which charge is distributed to three or more charge storage units CS.

In the example described in the above embodiment, as an example, charge generated in the photoelectric conversion device PD is distributed; however, the present embodiment is not limited to this. The present embodiment may be applied to a pixel structure further including a gate for discharge.

In the above embodiment, the example applied to the first embodiment has been described as an example; however, the present embodiment is not limited to this. A multi-tap pixel (e.g., a pixel SGb) may be applied to the second to fifth embodiments.

### [Eighth embodiment]

Next, a range imaging device 100 according to an eighth embodiment will be described with reference to the drawings.

In the eighth embodiment, an example of an imaging device (range imaging device 100) using the solid-state imaging element 1f according to the seventh embodiment will be described.

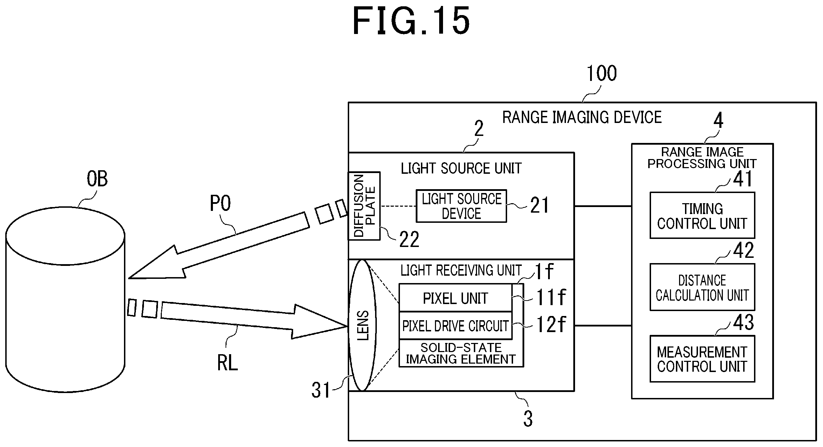

Fig. 15 is a block diagram showing an example of the range imaging device 100 according to the eighth embodiment.

As shown in Fig. 15, the range imaging device 100 includes a light source unit 2, a light receiving unit 3, and a range image processing unit 4. Fig. 15 also shows a subject OB as an object to which the distance is to be measured using the range imaging device 100. In the present embodiment, an example is described in which the solid-state imaging element 1f according to the seventh embodiment is used as an example of a range imaging element.

The light source unit 2 irradiates the subject OB with a light pulse PO. The light source unit 2 emits, according to control by the range image processing unit 4, a light pulse PO to a space of which an image is to be captured. In the space of which an image is to be captured, the subject OB is present as an object to which the distance is to be measured by the range imaging device 100. The light source unit 2 may be, for example, a surface-emitting semiconductor laser module such as a vertical-cavity surface-emitting laser (VCSEL). The light source unit 2 irradiates the subject OB, for example, with a light pulse PO that is structured light composed of a plurality of dot light beams periodically arranged.

The light source unit 2 includes a light source device 21 and a diffusion plate 22.

The light source device 21 is a light source that emits laser light in the near-infrared wavelength range (e.g., in a wavelength range of 850 nm to 940 nm). The laser light serves as a light pulse PO with which the subject OB is irradiated. The light source device 21 may be, for example, a semiconductor laser light-emitting element. The light source device 21 emits pulsed laser light according to control by a measurement control unit 43.

The diffusion plate 22 is an optical component that diffuses laser light in the near-infrared wavelength range emitted from the light source device 21 over an area in which the subject OB is irradiated with the diffused laser light. The pulsed laser light diffused by the diffusion plate 22 emerges as a light pulse PO, and the subject OB is irradiated with the light pulse PO.

The light receiving unit 3 receives reflected light RL of the light pulse PO reflected by the subject OB, and outputs a pixel signal corresponding to the reflected light RL received. The subject OB is an object to which the distance is to be measured by the range imaging device 100. The light receiving unit 3 includes a lens 31 and the solid-state imaging element 1f.

The lens 31 is an optical lens that guides the reflected light RL incident on the lens 31 to the solid-state imaging element 1f. The reflected light RL incident on the lens 31 emerges toward the solid-state imaging element 1f. Thus, the lens 31 causes the reflected light RL to be received by (incident on) the pixel unit 11f provided in the light receiving region of the solid-state imaging element 1f.

The solid-state imaging element 1f is an imaging element used in the range imaging device 100. The solid-state imaging element 1f includes the pixel unit 11f and the pixel drive circuit 12f. The pixel unit 11f includes the two-dimensional light receiving region including the plurality of pixels SGb. The pixel drive circuit 12f controls each of the pixels SGb.

As described above, each of the pixels SGb of the pixel unit 11f includes the single photoelectric conversion device PD, the plurality of charge storage units CS (charge storage unit CS1, charge storage unit CS2) corresponding to the single photoelectric conversion device PD, and a component that distributes charge to each of the charge storage units CS.

The pixel drive circuit 12f electrically connects the transfer transistors TQ to the respective charge storage units CS (charge storage unit CS1, charge storage unit CS2) at a predetermined storage timing synchronized with emission of a light pulse PO. Thus, the pixel drive circuit 12f causes charge to be distributed and stored in each of the charge storage units CS (charge storage unit CS1, charge storage unit CS2).

As described above, the pixel drive circuit 12f switches, according to the imaging scene (measurement scene), the pixel region between a single pixel (pixel SG), a 2× addition region, a 4× addition region, and the like.

The range image processing unit 4 controls the range imaging device 100 to calculate the distance to the subject OB. The range image processing unit 4 measures, as a measurement distance, the distance to the subject OB that is present in a measurement space, based on the quantity of charge stored in each of the charge storage units CS.

The range image processing unit 4 includes a timing control unit 41, a distance calculation unit 42, and the measurement control unit 43.

The timing control unit 41 controls the timing of outputting various control signals required for measurement, according to control by the measurement control unit 43. The various control signals include, for example, a signal for controlling emission of a light pulse PO, a signal for causing the reflected light RL to be distributed and stored in the plurality of charge storage units CS, and a signal for controlling a storage count per frame. The storage count is the number of repetitions of the process of causing charge to be distributed and stored in the charge storage units CS. The storage count is a distribution count set in advance in a frame period. The product of the storage count and a storage duration is an exposure time. The storage duration is a duration for which charge is stored in each of the charge storage units CS in a single process of causing charge to be distributed and stored.

The distance calculation unit 42 outputs distance information obtained by calculating the distance to the subject OB, based on a pixel signal output from the solid-state imaging element 1f. The distance calculation unit 42 calculates a delay time from the time at which a light pulse PO is emitted to the time at which the reflected light RL is received, based on the quantity of charge stored in the plurality of charge storage units CS. The distance calculation unit 42 calculates the distance to the subject OB according to the calculated delay time.

The measurement control unit 43 controls the timing control unit 41. For example, the measurement control unit 43 sets the storage count and the storage duration in one frame, and controls the timing control unit 41 to perform image capturing according to the setting. That is, the measurement control unit 43 performs setting for the frame period, and controls the timing control unit 41 to perform image capturing according to the setting.

With such a configuration, in the range imaging device 100, the light source unit 2 irradiates the subject OB with a light pulse PO in the near-infrared wavelength range, the light receiving unit 3 receives the reflected light RL of the light pulse PO reflected by the subject OB, and the range image processing unit 4 outputs distance information (distance image) obtained by measuring the distance to the subject OB.

As described above, the range imaging device 100 according to the present embodiment includes the light source unit 2 that irradiates the subject OB with a light pulse, the light receiving unit 3 including the solid-state imaging element 1f, and the range image processing unit 4. The range image processing unit 4 controls the pixel drive circuit 12f to store charge in each of the charge storage units CS, and calculates the distance to the subject OB based on the quantity of charge stored in each of the charge storage units CS.

Thus, the range imaging device 100 according to the present embodiment has the same effects as the solid-state imaging element 1f, and can flexibly change, according to the imaging scene, the pixel region by addition of charge. Therefore, the range imaging device 100 is less influenced by noise (achieves a higher S/N ratio).

The present invention is not limited to the above embodiments, and may be modified without departing from the spirit of the present invention.

For example, in the examples described in the above embodiments, the photoelectric conversion device PD is an embedded photodiode that performs photoelectric conversion of incident light to generate charge and stores the generated charge. However, the photoelectric conversion device PD is not limited to this, and the photoelectric conversion device PD may have any structure. The photoelectric conversion device PD may be, for example, a PN photodiode including a P-type semiconductor and an N-type semiconductor joined together, or may be a PIN photodiode including an I-type semiconductor sandwiched between P-type and N-type semiconductors. Furthermore, the photoelectric conversion device PD is not limited to a photodiode. The photoelectric conversion device PD may be, for example, a photogate-type photoelectric conversion device.

In the examples described in the above embodiments, each of the pixels SG (SGa, SGb) is a 4-transistor pixel, a 3-transistor pixel, or a multi-tap pixel (2-tap pixel). However, the pixels SG (SGa, SGb) are not limited to this, and the pixels SG (SGa, SGb) may be pixels having another structure. For example, the pixels SG (SGa, SGb) may have a configuration including a capacitor in the charge storage units CS.

In the examples described in the above embodiments, the reset transistors RQ (RQ1, RQ2), the source follower transistors SF (SF1, SF2), the transfer transistors TQ (TQ1, TQ2), the selection transistors SQ (SQ1, SQ2), the addition transistors RS1 to RS3 (RS11, RS12, RS21, RS22) are each an NMOS transistor. However, the transistors are not limited to this, and each of the transistors may be, for example, another transistor such as a PMOS transistor.

In the example described in the eighth embodiment, the range imaging device 100 uses the solid-state imaging element 1f according to the seventh embodiment. However, the range imaging device 100 is not limited to this, and may use, for example, the solid-state imaging element 1 (1a to 1e) of any of the first to sixth embodiments. Furthermore, the imaging device is not limited to a range imaging device, and for example, an imaging device such as a digital camera may be used.

The components of the range imaging device 100 or the pixel drive circuit 12 (12a to 12f) described above have a computer system. The processes in the components of the range imaging device 100 or the pixel drive circuit 12 (12a to 12f) may be performed by recording a program for implementing the functions of the components of the range imaging device 100 or the pixel drive circuit 12 (12a to 12f) on a computer-readable recording medium and causing the computer system to read and execute the program recorded on the recording medium. Here, "causing the computer system to read and execute the program recorded on the recording medium" includes installing the program on the computer system. The "computer system" here includes an operating system (OS) and hardware such as peripheral devices.

The "computer system" may include a plurality of computer devices connected to each other through a network including a communication channel such as the Internet, a WAN, a LAN, or a dedicated line. The "computer-readable recording medium" refers to a storage device such as a portable medium, e.g., a flexible disk, magneto-optical disk, ROM, CD-ROM or the like, or a hard disk incorporated in the computer system. Thus, the recording medium that stores the program may be a non-transitory recording medium such as a CD-ROM.

The recording medium includes an internal or external recording medium accessible from a distribution server for distributing the program. The program may be divided into a plurality of segments, and the program segments may be downloaded at different timings and then combined in the components of the range imaging device 100 or the pixel drive circuit 12 (12a to 12f), or the program segments may be distributed by different distribution servers. Furthermore, the "computer-readable recording medium" includes a recording medium that holds the program for a given period of time, such as a volatile memory (RAM) in a computer system that serves as a server or a client when the program is transmitted through a network. The above program may be a program for implementing part of the functions described above. Furthermore, the program may be a program capable of implementing the functions in combination with a program already recorded in the computer system, that is, a differential file (differential program).

Part or all of the functions described above may be implemented as an integrated circuit such as an LSI (large-scale integration). The functions may be individually incorporated into a processor, or part or all of the functions may be integrated into a processor. The functions implemented as an integrated circuit may not necessarily be an LSI, and may be a dedicated circuit or a general-purpose processor. Furthermore, if advances in semiconductor technology provide an integrated circuit technique that replaces LSIs, an integrated circuit obtained using the technique may be used.

### [Industrial Applicability]

As described above, the present invention can flexibly change, according to the imaging scene, a pixel region in which addition of charge is performed, while preventing a large pixel size.

### [Reference Signs List]

1, 1a, 1b, 1c, 1d, 1e, 1f ... Solid-state imaging element
2 ... Light source unit
3 ... Light receiving unit
4 ... Range image processing unit
11, 11a, 11b, 11c, 11d, 11e, 11f ... Pixel unit
12, 12a, 12b, 12c, 12d, 12e, 12f ... Pixel drive circuit
21 ... Light source device
22 ... Diffusion plate
31 ... Lens
41 ... Timing control unit
42 ... Distance calculation unit
43 ... Measurement control unit
100 ... Range imaging device
CL1, CL11, CL12, CL2, CL21, CL22, CL3 ... Connection line
CS, CS1, CS2 ... Charge storage unit
FD, FD1, FD2 ... Floating diffusion
GA1, GA11, GA12, GA2 ... Addition pixel region
OB ... Subject
OL ... Outlet line
PD ... Photoelectric conversion device
PO ... Light pulse
RL ... Reflected light
RQ, RQ1, RQ2 ... Reset transistor
RS1, RS11, RS12, RS2, RS21, RS22, RS3 ... Addition transistor
SG, SG1, SG2, SG3, SG4, SGa, SGa1, SGa2, SGa3, SGa4, SGb, SGa1, SGa2, SGa3, SGa4 ... Pixel
SQ, SQ1, SQ2 ... Selection transistor
SF, SF1, SF2 ... Source follower transistor
TQ, TQ1, TQ2 ... Transfer transistor

## Claims

1. A solid-state imaging element comprising:
a plurality of pixels each of which includes a photoelectric conversion device that generates charge corresponding to incident light, a charge storage unit that stores the charge, and a reset switch that resets a potential of the charge storage unit to a predetermined reset potential supplied from a power supply line;
addition switches that are connected in series in two or more stages and each of which is disposed between the power supply line and a connection line connecting power supply line sides of the reset switches of a predetermined number of pixels, the addition switches being capable of changing, by a change in a conduction state, a region of the pixels in which addition of the charge stored in the charge storage unit is performed; and
a pixel drive circuit that changes a conduction state of the reset switches and the addition switches in the two or more stages according to the region of the pixels in which addition of the charge is performed.

2. The solid-state imaging element according to claim 1, wherein
the addition switches in the two or more stages are
first addition switches each of which is disposed between the power supply line and a first connection line connecting power supply line sides of the reset switches of N pixels and enables, via the first connection line and the reset switches, addition of the charge stored in N charge storage units of the charge storage units, N being an integer greater than or equal to 2, and
a second addition switch that is disposed between the power supply line and a second connection line connecting power supply line sides of M first addition switches of the first addition switches and enables, via the second connection line and the first addition switches, addition of addition charge in addition pixel regions each of which is a region of the N pixels connected by the first connection line, M being an integer greater than or equal to 2, and
the pixel drive circuit changes a conduction state of the reset switches, the first addition switches, and the second addition switch according to the region of the pixels in which addition of the charge is performed.

3. The solid-state imaging element according to claim 2, wherein
the addition pixel regions are linearly connected and serve as a line sensor.

4. The solid-state imaging element according to claim 2, wherein
the first connection line and the second connection line are connected to perform addition of pixels that are not adjacent to each other.

5. The solid-state imaging element according to any one of claims 1 to 4, wherein
each of the pixels is a 4-transistor pixel including a reset transistor that is the reset switch, a source follower transistor that converts the charge into an electrical signal, a transfer transistor that transfers the charge to the source follower transistor, and a selection transistor that selects reading of the electrical signal of a corresponding one of the pixels.

6. The solid-state imaging element according to any one of claims 1 to 4, wherein
each of the pixels is a 3-transistor pixel including a reset transistor that is the reset switch, a source follower transistor that converts the charge into an electrical signal, and a selection transistor that selects reading of the electrical signal of a corresponding one of the pixels.

7. The solid-state imaging element according to any one of claims 1 to 4, wherein
each of the pixels includes a plurality of charge storage units, and charge is allowed to be distributed and stored in each of the charge storage units, and
the pixel drive circuit causes the charge to be distributed and stored in each of the charge storage units.

8. A range imaging device comprising:
a light source unit that irradiates a subject with a light pulse;
a light receiving unit that includes the solid-state imaging element according to claim 7; and
a range image processing unit that controls the pixel drive circuit to cause charge to be stored in each of the charge storage units and calculates a distance to the subject based on a quantity of charge stored in each of the charge storage units.

9. A method of controlling a solid-state imaging element, wherein
the solid-state imaging element includes
a plurality of pixels each of which includes a photoelectric conversion device that generates charge corresponding to incident light, a charge storage unit that stores the charge, and a reset switch that resets a potential of the charge storage unit to a predetermined reset potential supplied from a power supply line, and
addition switches that are connected in series in two or more stages and each of which is disposed between the power supply line and a connection line connecting power supply line sides of the reset switches of a predetermined number of pixels, the addition switches being capable of changing, by a change in a conduction state, a region of the pixels in which addition of the charge stored in the charge storage unit is performed, and
a pixel drive circuit changes a conduction state of the reset switches and the addition switches in the two or more stages according to the region of the pixels in which addition of the charge is performed.
